# EUROPEAN PATENT APPLICATION

(11) **EP 3 059 045 A1**
(43) Date of publication of application: **24.08.2016**
(21) Application number: 16156075.0
(22) Date of filing: 17.02.2016
(51) Int. Cl.: B23P 15/02, B23H 9/10, F01D 5/14

(54) **METHOD OF PROCESSING UNFINISHED SURFACES**

(30) Priority: 17.02.2015 US 201514624227
(71) Applicant: United Technologies Corporation, Farmington, CT 06032 (US)
(72) Inventor: RIZZO, John P., Vernon, CT Connecticut 06066 (US)
(74) Representative: Hall, Matthew Benjamin

(57) **Abstract**

A method of fabricating a finished part (86) comprises creating an unfinished part (30) using a primary metal fabrication process (46), wherein the primary metal fabrication process leaves a surface deformation (38) on the unfinished part, and removing the surface deformation from the unfinished part using a secondary metal fabrication process (84), wherein the secondary metal fabrication process further creates the finished part from the unfinished part. The disclosed method may save manufacturing steps and increase production accuracy.

## Description

### Technical Field

This disclosure generally relates to metal parts manufacturing and, more particularly, relates to methods for finishing surfaces of metal parts.

### Background

Metal parts are commonly manufactured to fulfill a variety of uses across many industries. Such parts, generally made from metals or metal alloys, can exhibit excellent thermal, electrical, insular and structural properties. Welding is a common method used to join or otherwise alter metal components. Casting is also often used to form parts by pouring molten material into molds.

Metal parts can be fabricated to serve in gas turbine engines. Specifically, such parts can be airfoils, blades or vanes. However, when a metal part is manufactured, raised surfaces may result on the part that must be addressed. These raised surfaces must be removed in order to ensure proper gas turbine engine operation, a process that may result in added time, costs and manual inputs.

Gas turbine engine parts are made from a variety of fabrication processes, including casting, welding, joining and additive machining, among others. The parts may be fabricated from a range of materials, including metals and specialty alloys due to varying thermal and mechanical operational stresses at different points in the gas turbine engine.

When fabricating a gas turbine engine part using such processes, the unfinished part may be left with a resulting surface deformation. Creating a finished part suitable for use requires removing the surface deformation and finishing the part. Currently, this involves separate steps of removing the surface deformation and then modifying the unfinished part into a finished part with another process. These distinct steps increase fabrication time and costs. Further, current manufacturing often requires significant manual input for one or both of these steps, hindering production speed and accuracy.

Accordingly, there is a need for an improved method of finishing a part.

### Summary of the Disclosure

To meet the needs described above, the present disclosure provides a method of fabricating a finished part, that may comprise creating an unfinished part using a primary metal fabrication process, wherein the primary metal fabrication process leaves a surface deformation on the unfinished part, and removing the surface deformation from the unfinished part using a secondary metal fabrication process, wherein the secondary metal fabrication process further creates the finished part from the unfinished part.

The primary metal fabrication process may be casting, investment casting or may be selected from the group consisting of welding, joining and additive manufacturing. Further, the secondary metal fabrication process may expose one or more cores used in the primary metal fabrication process. Additionally, the secondary metal fabrication process may be an electrochemical machining process or a photochemical machining process, and the finished part may be a gas turbine engine airfoil.

The present disclosure also provides a method of fabricating a finished airfoil, that may comprise creating an unfinished airfoil using a primary metal fabrication process, wherein the primary metal fabrication process leaves a surface deformation on the unfinished airfoil, and removing the surface deformation from the unfinished airfoil using a secondary metal fabrication process, wherein the secondary metal fabrication process further creates the finished airfoil from the unfinished airfoil.

The primary metal fabrication process may be casting, investment casting or may be selected from the group consisting of welding, joining and additive manufacturing. Further, the secondary metal fabrication process may expose one or more cores used in the primary metal fabrication process. Additionally, the secondary metal fabrication process may be an electrochemical machining process or a photochemical machining process.

The present disclosure also provides a finished part prepared by a process that may comprise the steps of creating an unfinished part using a primary metal fabrication process, wherein the primary metal fabrication process leaves a surface deformation on the unfinished part, and removing the surface deformation from the unfinished part using a secondary metal fabrication process, wherein the secondary metal fabrication process further creates the finished part from the unfinished part.

The finished part may be a finished airfoil. Further, the primary metal fabrication process may be investment casting, and may expose one or more cores used in the primary metal fabrication process. Additionally, the secondary metal fabrication process may be an electrochemical machining process or a photochemical machining process.

According to one aspect of the present disclosure, there is provided a method of fabricating a finished part, comprising: creating an unfinished part using a primary metal fabrication process, the primary metal fabrication process generating a surface deformation on the unfinished part; and removing the surface deformation from the unfinished part using a secondary metal fabrication process, wherein the secondary metal fabrication process further creates the finished part from the unfinished part.

In addition to one or more of the features described above, or as an alternative to any of the foregoing embodiments, the primary metal fabrication process may be casting.

In addition to one or more of the features described above, or as an alternative to any of the foregoing embodiments, the primary metal fabrication process may be investment casting.

In addition to one or more of the features described above, or as an alternative to any of the foregoing embodiments, the secondary metal fabrication process may expose one or more cores used in the primary metal fabrication process.

In addition to one or more of the features described above, or as an alternative to any of the foregoing embodiments, the primary metal fabrication process may be selected from the group consisting of welding, joining and additive manufacturing.

In addition to one or more of the features described above, or as an alternative to any of the foregoing embodiments, the finished part may be an airfoil.

According to another aspect of the present disclosure, there is provided a method of fabricating a finished airfoil, comprising: creating an unfinished airfoil using a primary metal fabrication process, wherein the primary metal fabrication process leaves a surface deformation on the unfinished airfoil; and removing the surface deformation from the unfinished airfoil using a secondary metal fabrication process, wherein the secondary metal fabrication process further creates the finished airfoil from the unfinished airfoil.

In addition to one or more of the features described above, or as an alternative to any of the foregoing embodiments, the primary metal fabrication process may be casting.

In addition to one or more of the features described above, or as an alternative to any of the foregoing embodiments, the primary metal fabrication process may be investment casting.

In addition to one or more of the features described above, or as an alternative to any of the foregoing embodiments, the secondary metal fabrication process may expose one or more cores used in the primary metal fabrication process.

In addition to one or more of the features described above, or as an alternative to any of the foregoing embodiments, the primary metal fabrication process may be selected from the group consisting of welding, joining and additive manufacturing.

In addition to one or more of the features described above, or as an alternative to any of the foregoing embodiments, the secondary metal fabrication process may be an electrochemical machining process.

In addition to one or more of the features described above, or as an alternative to any of the foregoing embodiments, the secondary metal fabrication process may be a photochemical machining process.

According to another aspect of the present disclosure, there is provided a finished part prepared by a process comprising the steps of: creating an unfinished part using a primary metal fabrication process, wherein the primary metal fabrication process leaves a surface deformation on the unfinished part; and removing the surface deformation from the unfinished part using a secondary metal fabrication process, wherein the secondary metal fabrication process further creates the finished part from the unfinished part.

In addition to one or more of the features described above, or as an alternative to any of the foregoing embodiments, the finished part may be a finished airfoil.

In addition to one or more of the features described above, or as an alternative to any of the foregoing embodiments, the primary metal fabrication process may be investment casting.

In addition to one or more of the features described above, or as an alternative to any of the foregoing embodiments, the secondary metal fabrication process may expose one or more cores used in the primary metal fabrication process.

In addition to one or more of the features described above, or as an alternative to any of the foregoing embodiments, the secondary metal fabrication process may be an electrochemical machining process.

In addition to one or more of the features described above, or as an alternative to any of the foregoing embodiments, the secondary metal fabrication process may be a photochemical machining process.

These, and other aspects and features of the present disclosure, will be better understood upon reading the following detailed description when taken in conjunction with the accompanying drawings.

### Brief Description of the Drawings

For further understanding of the disclosed concepts and embodiments, reference may be made to the following detailed description, read in connection with the drawings, wherein like elements are numbered alike, and in which:
FIG. 1 is a sectional view of a gas turbine engine constructed in accordance with the present disclosure;
FIG. 2 is a sectional view of an unfinished part constructed in accordance with the present disclosure.
FIG. 3 is a schematic view of a primary metal fabrication process in accordance with the present disclosure.
FIG. 4 is a sectional view of an unfinished part with a surface deformation constructed in accordance with the present disclosure.
FIG. 5 is a sectional view of another embodiment of an unfinished part with a surface deformation constructed in accordance with the present disclosure.
FIG. 6 is a sectional view of a finished part constructed in accordance with the present disclosure.
FIG. 7 is a sectional view of another embodiment of a finished part constructed in accordance with the present disclosure.
FIG. 8 is a perspective view of a finished airfoil constructed in accordance with the present disclosure.
FIG. 9 is a schematic view of a secondary metal fabrication process in accordance with the present disclosure.
FIG. 10 is a schematic view of another embodiment of a secondary metal fabrication process in accordance with the present disclosure.
FIG. 11 is a flowchart depicting a sample sequence of steps which may be practiced using the teachings of the present disclosure.

It is to be noted that the appended drawings illustrate only typical embodiments and are therefore not to be considered limiting with respect to the scope of the disclosure or claims. Rather, the concepts of the present disclosure may apply within other equally effective embodiments. Moreover, the drawings are not necessarily to scale, emphasis generally being placed upon illustrating the principles of certain embodiments.

### Detailed Description

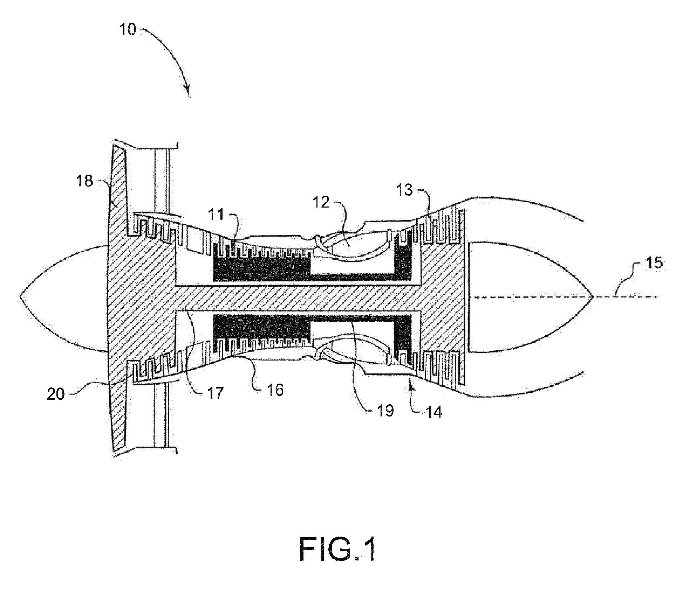

Turning now to the drawings, and with specific reference to FIG. 1, a gas turbine engine constructed in accordance with the present disclosure is generally referred to by reference numeral 10. While the following detailed description will be made with specific reference to gas turbine engines 10, and parts made therefore, it is to be understood that the teachings of this disclosure are not so limited. Rather, the casting and finishing processes disclosed herein are applicable to a wide range of metal part manufacturing areas including, but not limited to, the aerospace, automotive and medical industries as well.

However, by way of background with specific reference to aerospace, the gas turbine engine 10 is shown to include a compressor 11, combustor 12 and turbine 13, known as the engine core 14, lying along a central longitudinal axis 15, and surrounded by an engine core cowl 16. The compressor 11 is connected to the turbine 13 via a central rotating shaft 17. Additionally, in a typical multi-spool design, plural turbine 13 sections are connected to, and drive, corresponding plural sections of the compressor 11 and a fan 18 via the central rotating shaft 17, enabling increased compression efficiency.

As is well known by those skilled in the art, ambient air enters the compressor 11 at an inlet 19, is pressurized, and is then directed to the combustor 12, mixed with fuel and combusted. This generates combustion gases that flow downstream to the turbine 13, which extracts kinetic energy from the exhausted combustion gases. The turbine 13, via central rotating shaft 17, drives the compressor 11 and the fan 18, which draws in ambient air. Thrust is produced both by ambient air accelerated aft by the fan 18 and by exhaust gasses exiting from the engine core 14.

In operation, various parts of the gas turbine engine 10 may experience varying thermal and mechanical operational stresses at different points in the gas turbine engine 10. In addition, such parts need to function under high stresses and extremely tight tolerances. Accordingly, the specifications to which the component parts are manufactured are exacting. Parts with any surface deformations must be finished so as to meet such specifications. However, as mentioned above, current metal fabrication processes require such finishing to be manual. This may add costs and time, while also leading to increased scrap metal.

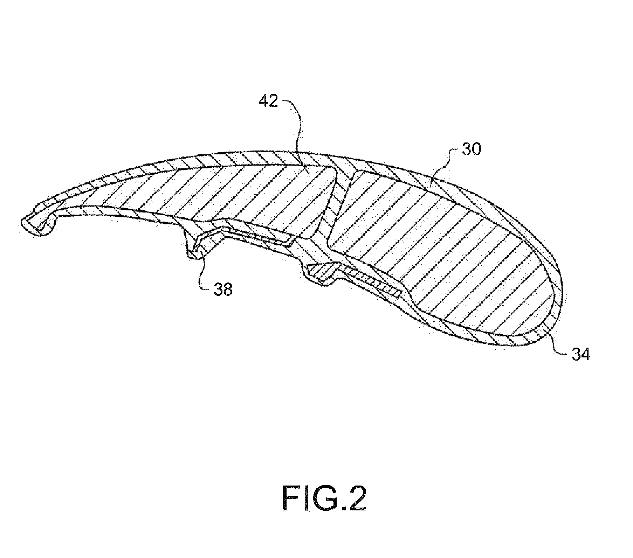

It is in this regard that the present disclosure drastically improves over the prior art. For example, referring now to FIG. 2, a sample unfinished part 30, which is to be finished according to the present disclosure, is shown as an unfinished airfoil 34. As shown therein, the unfinished airfoil 34, which may be defined as a blade, stator or vane, may initially include a surface deformation 38. If not removed, the gas turbine engine 10 will not operate, or will operate at decreased efficiency. As defined herein, a "surface deformation" is a protrusion or undesired surface irregularity. Examples include parting lines, gates, and raised areas such as RMC (Refractory Metal Core) exit posts as described below.

In the embodiment of the unfinished part 30 shown in FIG. 2, the unfinished part 30 may include a removable core 42. The core 42 may be used to help shape the unfinished part 30, but then be removed in the finished part leaving behind a hollowed interior. The surface deformation 38 may be a byproduct of using such a core 42 and associated RMC exit post, or be otherwise formed.

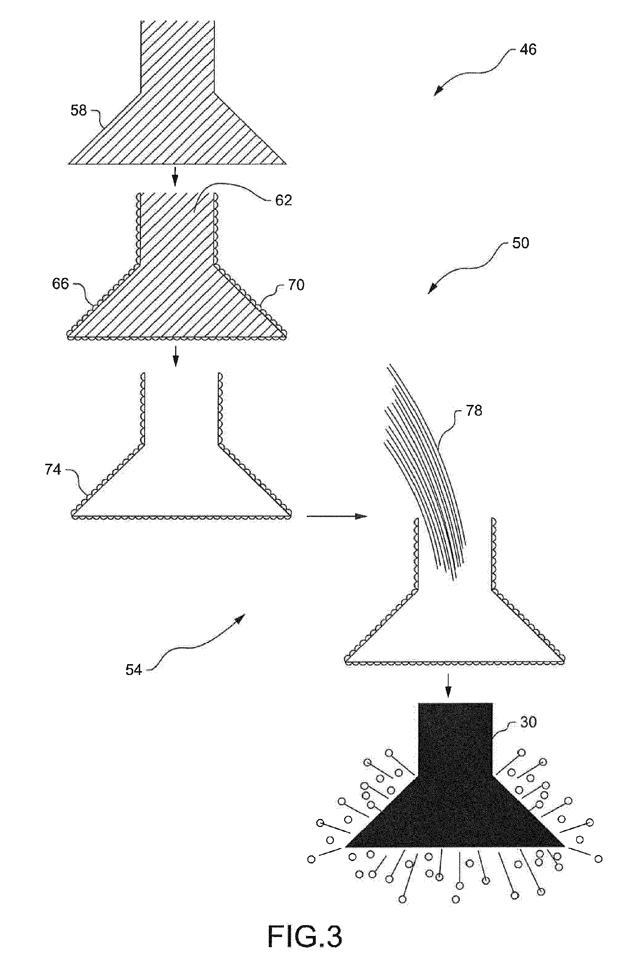

According to the present disclosure, the unfinished part 30 may be formed by a primary metal fabrication process 46 as shown in exemplary fashion in FIG. 3. The primary metal fabrication process 46 is shown as a casting process 50 and, more specifically, as an investment casting process 54. Although the primary metal fabrication process 46 is shown as the investment casting process 54, it is to be understood that the "primary metal fabrication process" as defined herein includes, but is not limited to, casting, welding, joining, additive machining or a combinations thereof. Additive manufacturing is a process by which layers or sections of material are systematically and sequentially added to an existing part to modify the existing part. Alternatively, the additive manufacturing process can build a part from scratch by adding layers and sections of material.

Referring again to FIG. 3, the primary metal fabrication process 46 may begin by forming a pattern 58 constructed from wax 62, or any number of easily liquefied substances including foams, and polymers. The pattern 58 may also be in variety of shapes, and a single wax structure may include a plurality of patterns 58 to expedite the production of metal parts, for example airfoils. The pattern 58 may then be coated in a slurry 66 comprising a refractory material 70 such as, but not limited to, plaster, silica, sand, clay or another ceramic. After the pattern 58 is coated in the slurry 66, the slurry 66 may then dry and form an investment 74 around the pattern 58.

Subsequently, the pattern 58 and investment 74 may then be heated, with the wax 62 melting and being removed from the investment 74, as by heating upside down. Molten material 78 may then be poured into the now empty investment 74. The molten material 78 may include, but is not limited to, metals, alloys, ceramics and polymers. In addition, while not shown in FIG. 3, if the desired part is to have an internal void or hollow, a core such as RMC core 42 may be used. In order to be ultimately removable, the core 42 may be made of materials such as ceramics or refractory metals having a lesser melting point than the part 30.

Once poured, the molten material 78 is then allowed to solidify within the investment 74 to take the shape of the original pattern 58. After solidification, the investment 74 may be removed from the solidified molten material 78, as by hammering, sand blasting, vibration or the like. As used herein, this solidified molten material 78 is referred to as an unfinished part 30 with one or more surface deformations 38 needing to be removed before use, as will now be described.

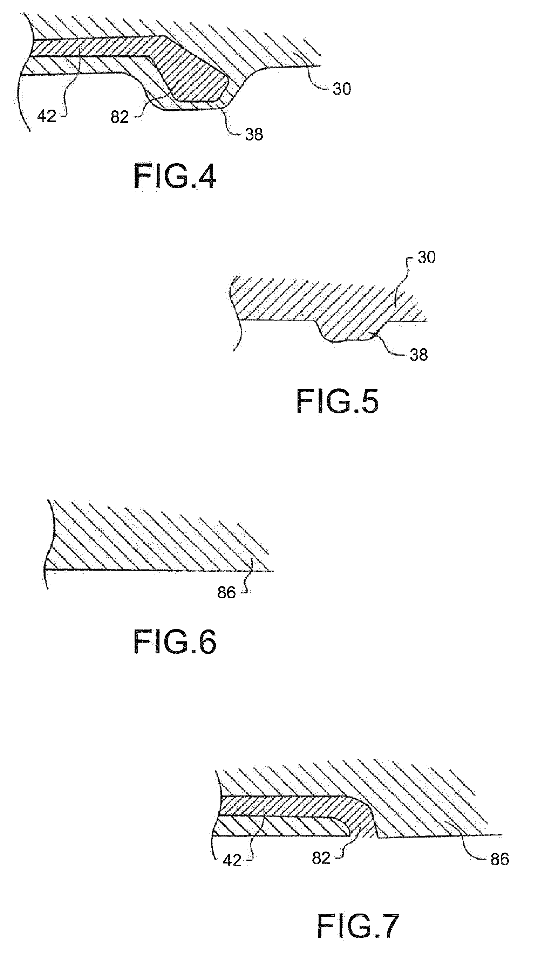

Referring now to FIG. 4, an embodiment of the unfinished part 30 is shown, having the core 42 and surface deformation 38 shown along with a core exit 82. The core exit 82 may be a section of the core 42 at or near the exterior of the unfinished part 30. In FIG. 4, the core exit 82 is shown as being disposed within the surface deformation 38. If the casting process 50 is used, the core 42 may be employed to shape the unfinished part 30 and form a hollow interior as mentioned above. After the molten material 78 has hardened, the core 42 is removed from the unfinished part 30 in order to isolate the unfinished part 30. The core exit 82, sometimes referred to as an RMC exit post, exposed to the exterior of the unfinished part 30 facilitates this removal. Further, the unfinished part 30 may include one or more core exits 82.

An alternative embodiment of the unfinished part 30 is shown in FIG. 5. However, as opposed to FIG. 4, this embodiment does not include a core 42 or a core exit 82. Instead, this embodiment may result from a primary metal fabrication process 46 that does not involve a core 42, but nevertheless leaves a surface deformation to be removed. The teachings of the present disclosure can nonetheless be used to remove such surface deformations 38.

While the foregoing completes the primary metal fabrication process 46 as defined herein, the present disclosure also includes a secondary metal fabrication process 84 to arrive at a finished part 86. The finished part 86, as shown in FIG. 6, is fit for use in that it is free of any unfinished surfaces, with the surface deformation 38 removed. While the finished part 86 shown in FIG. 6 does not incorporate a core 42 or a core exit 82, another embodiment of the finished part 86, as shown in FIG. 7, may include a core 42 and a core exit 82.

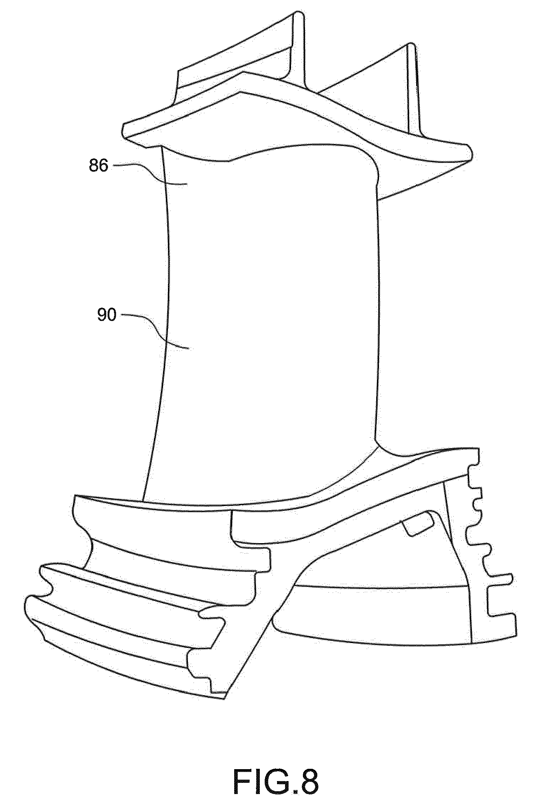

The finished part 86 may be any number of products, with one example being a finished airfoil 90, as shown in FIG. 8. The finished airfoil 90 may produce an aerodynamic force when subjected to a fluid flow. Additionally, the finished airfoil 90 may be located in a compressor 11, turbine 13, fan 18 or inlet 19 of a gas turbine engine 10, as well as in other locations as noted above. Further, the finished airfoil 90 may be a vane, blade, stator, fan blade or other airfoil within the gas turbine engine 10.

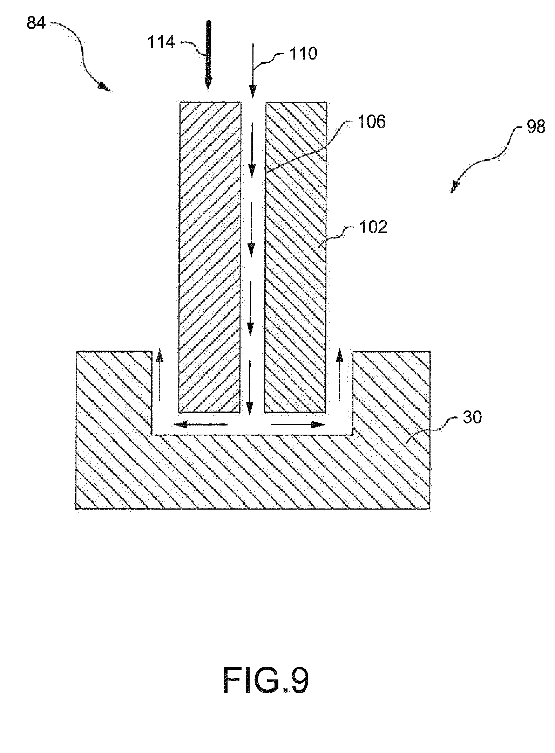

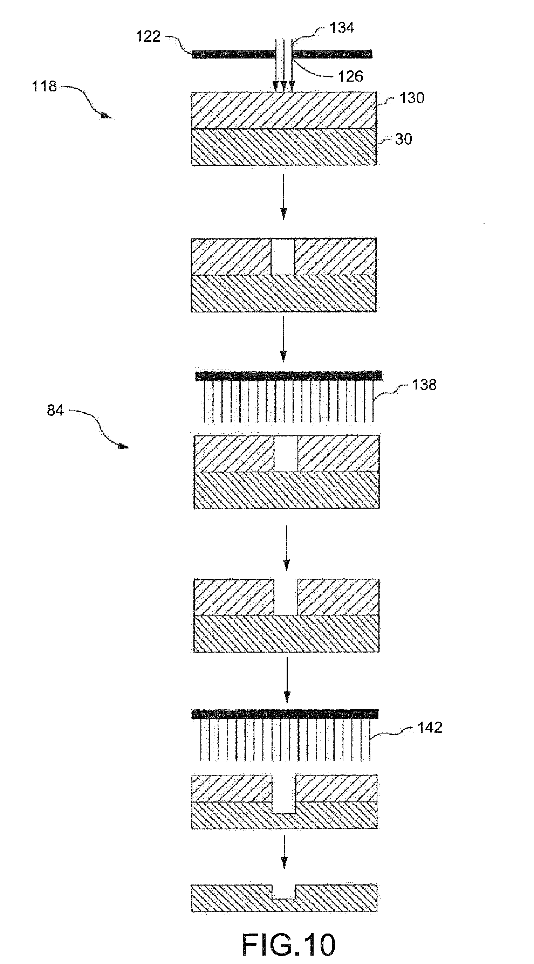

The secondary metal fabrication process 84 will now be described in detail with reference to FIGS. 9 and 10. As defined herein, "secondary metal fabrication process" is defined as finishing an unfinished part, in order to make it suitable for use, including removing any surface deformation using one of electro-chemical machining and photochemical machining. In so doing, the present disclosure drastically improves upon the prior art by avoiding the separate steps of removing the surface deformation 38 and then modifying and finishing the unfinished part 30. Rather, these distinct steps are combined and performed by a single process as will now be described. This combination saves fabrication time and resources. The unfinished part 30 may also be finished by a process that does not cause fabrication components to wear, as described below, further reducing production costs. Additionally, current metal fabrication processes require significant manual labor inputs for one or both of these steps, hindering production speed and accuracy. The processes described below eliminate these hindrances.

An embodiment of a secondary metal fabrication process 84 is shown in FIG. 9. Specifically, the embodiment shown is an electrochemical machining process 98, although other processes may be used. As shown therein, a finishing tool 102 is provided for finishing the unfinished part 30. For example, the finishing tool 102 may include a channel 106 for communicating an electrolyte 110 to the unfinished part 30, specifically the surface deformation of the unfinished part 30. The electrolyte 110 is used to carry electrical charge to electrochemically remove or wash away machined material. In operation, the finishing tool 102 may travel in a feed direction 114, which may be towards the unfinished part 30. The finishing tool 102 may function as an anode while the unfinished part 30 may function as a cathode. However, the opposite arrangement is certainly possible. As the finishing tool 102 is fed towards the unfinished part 30, material of the unfinished part 30 may be liquefied by the involved electrical forces, and may be washed away by the electrolyte 110. Accordingly, the finishing tool 102 shape and travel may determine how the unfinished part 30 is machined.

Not only does the electrochemical machining process 98 described above machine the unfinished part 30, but it also not produce finishing tool 102 wear, as the finishing tool 102 does not make direct contact with the unfinished part 30. The electrochemical machining process 98 may also enable the manufacture of complex shapes, and save costs by completing a given task within less time with fewer passes. Additionally, the unfinished part 30 may be modified into a finished part 86, while also removing a surface deformation 38 from an unfinished part 30, in a single step using the electrochemical machining process 98.

Another embodiment of a secondary metal fabrication process 94 is shown in FIG. 10. Specifically, the secondary metal fabrication process 94 is shown as a photochemical machining process 118, as opposed to the aforementioned electrochemical process of FIG. 9. As shown herein, the secondary metal fabrication process 94 may begin by providing a mask 122 having one or more holes 126 therethrough. The mask 122 may be positioned adjacent to a photoresist 130, and the photoresist 130 may be positioned adjacent to the unfinished part 30. The photoresist 130 may be composed of a substance whose chemical properties change when exposed to radiation 134, including, but not limited to, metals and polymers such as SU-8 and poly(methyl methacrylate) (PMMA) or poly(methyl glutarimide) (PMGI) or phenol formaldehyde resin (DNQ/Novolac). The radiation 134 may pass through the holes 126 in the mask 122 and strike the exposed areas of the photoresist 130. The exposed areas of the photoresist 130 may then change chemical properties.

Subsequently, a developing solution 138 may be used to wash away the parts of the photoresist 130 exposed to the radiation 134. This process is known as developing. An etching solution 142 may then be used to etch a portion of the unfinished part 30 adjacent to the portion of the photoresist 130 washed away by the developing solution. In this manner, the pattern of the holes 126 may be transferred to the photoresist 130 and to the unfinished part 30, and may finish the unfinished part 30. The photochemical machining process 112 described above is referred to as a positive resist process. However, it is to be understood that the photochemical machining process 112 can also be a negative resist process, as well.

The photochemical machining process 118 described above also does not produce wear among any fabrication components involved, as there are no moving parts that make contact with the unfinished part 30. The photochemical machining process 118 may also enable the manufacture of complex and delicate shapes, and save costs by completing a given task within less time with fewer passes. Additionally, the unfinished part 30 may be modified into a finished part 86, while also removing a surface deformation 38 from an unfinished part 30, in a single step using the photochemical machining process 118.

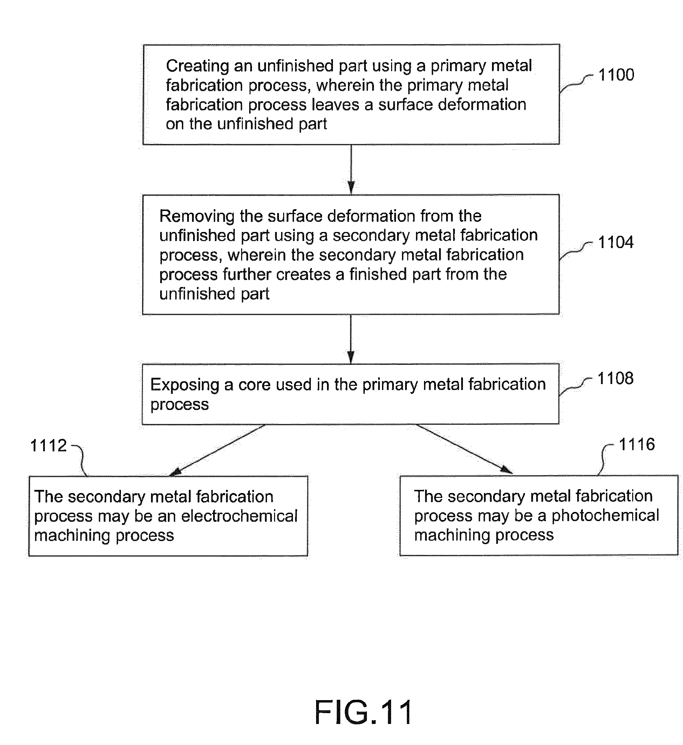

A method for fabricating a finished part can best be understood by referencing the flowchart in FIG. 11. The method may comprise creating an unfinished part using a primary metal fabrication process, wherein the primary metal fabrication process leaves a surface deformation on the unfinished part, as shown in step 1100. The method then removes the surface deformation from the unfinished part using a secondary metal fabrication process, wherein the secondary metal fabrication process further creates the finished part from the unfinished part, as shown in step 1104. The secondary metal fabrication process may expose a core used in the primary metal fabrication process, as shown in step 1108. Additionally, the secondary metal fabrication process may be an electrochemical machining process or a photochemical machining process, as shown in steps 1112 and 1116, respectively.

### Industrial Applicability

In operation, the present disclosure sets forth a method of fabricating a finished part which can find industrial applicability in a variety of settings. For example, the disclosure may be advantageously employed in manufacturing various parts of a gas turbine engine 10, such as but not limited to, blades and vanes.

The metal fabrication processes, as described herein, preclude separate steps of removing a surface deformation and then modifying such an unfinished part into a finished part with an additional process. The disclosed method increases process efficiency by completing two steps simultaneously, in less time. The unfinished part may also be finished by a secondary metal fabrication process that does not cause fabrication components to wear, further reducing production costs. Additionally, the disclosed method may eliminate manual inputs for one or both of these steps, increasing production speed and accuracy. The following clauses set out features of the present disclosure which may or may not presently be claimed but which may form basis for future amendments and/or a divisional application.
1. A method of fabricating a finished part, comprising:
   creating an unfinished part using a primary metal fabrication process, the primary metal fabrication process generating a surface deformation on the unfinished part; and
   removing the surface deformation from the unfinished part using a secondary metal fabrication process, wherein the secondary metal fabrication process further creates the finished part from the unfinished part.
2. The method of clause 1, wherein the primary metal fabrication process is casting.
3. The method of clause 2, wherein the primary metal fabrication process is investment casting.
4. The method of clause 2, wherein the secondary metal fabrication process exposes one or more cores used in the primary metal fabrication process.
5. The method of clause 1, wherein the primary metal fabrication process is selected from the group consisting of welding, joining and additive manufacturing.
6. The method of clause 1, wherein the finished part is an airfoil.
7. The method of clause 1, wherein the secondary metal fabrication process is selected from the group consisting of electrochemical machining and photochemical machining.
8. A method of fabricating a finished airfoil, comprising:
   creating an unfinished airfoil using a primary metal fabrication process, wherein the primary metal fabrication process leaves a surface deformation on the unfinished airfoil; and
   removing the surface deformation from the unfinished airfoil using a secondary metal fabrication process, wherein the secondary metal fabrication process further creates the finished airfoil from the unfinished airfoil.
9. The method of clause 8, wherein the primary metal fabrication process is casting.
10. The method of clause 9, wherein the primary metal fabrication process is investment casting.
11. The method of clause 9, wherein the secondary metal fabrication process exposes one or more cores used in the primary metal fabrication process.
12. The method of clause 8, wherein the primary metal fabrication process is selected from the group consisting of welding, joining and additive manufacturing.
13. The method of clause 8, wherein the secondary metal fabrication process is an electrochemical machining process.
14. The method of clause 8, wherein the secondary metal fabrication process is a photochemical machining process.
15. A finished part prepared by a process comprising the steps of:
   creating an unfinished part using a primary metal fabrication process, wherein the primary metal fabrication process leaves a surface deformation on the unfinished part; and
   removing the surface deformation from the unfinished part using a secondary metal fabrication process, wherein the secondary metal fabrication process further creates the finished part from the unfinished part.
16. The finished part of clause 15, wherein the finished part is a finished airfoil.
17. The finished part of clause 15, wherein the primary metal fabrication process is investment casting.
18. The finished part of clause 15, wherein the secondary metal fabrication process exposes one or more cores used in the primary metal fabrication process.
19. The finished part of clause 15, wherein the secondary metal fabrication process is an electrochemical machining process.
20. The finished part of clause 15, wherein the secondary metal fabrication process is a photochemical machining process.

## Claims

1. A method of fabricating a finished part (86), comprising:
creating an unfinished part (30) using a primary metal fabrication process (46), the primary metal fabrication process generating a surface deformation (38) on the unfinished part; and
removing the surface deformation from the unfinished part using a secondary metal fabrication process (84), wherein the secondary metal fabrication process further creates the finished part from the unfinished part.

2. The method of claim 1, wherein the primary metal fabrication process (46) is casting (50).

3. The method of claim 2, wherein the primary metal fabrication process (46) is investment casting (54); and/or
wherein the secondary metal fabrication process (84) exposes one or more cores (42) used in the primary metal fabrication process.

4. The method of claim 1, wherein the primary metal fabrication process (46) is selected from the group consisting of welding, joining and additive manufacturing.

5. The method of any preceding claim, wherein the finished part (86) is an airfoil (90).

6. The method of any preceding claim, wherein the secondary metal fabrication process (84) is selected from the group consisting of electrochemical machining (98) and photochemical machining (118).

7. A method of fabricating a finished airfoil (90), comprising:
creating an unfinished airfoil (34) using a primary metal fabrication process (46), wherein the primary metal fabrication process leaves a surface deformation (38) on the unfinished airfoil; and
removing the surface deformation from the unfinished airfoil using a secondary metal fabrication process (84), wherein the secondary metal fabrication process further creates the finished airfoil from the unfinished airfoil.

8. The method of claim 7, wherein the primary metal fabrication process (46) is casting (50).

9. The method of claim 8, wherein the primary metal fabrication process (46) is investment casting (54); and/or
wherein the secondary metal fabrication process (84) exposes one or more cores (42) used in the primary metal fabrication process.

10. The method of claim 7, wherein the primary metal fabrication process (46) is selected from the group consisting of welding, joining and additive manufacturing.

11. The method of any of claims 7 to 10, wherein the secondary metal fabrication process (84) is an electrochemical machining process (98); or
wherein the secondary metal fabrication process is a photochemical machining process (118).

12. A finished part (86) prepared by a process comprising the steps of:
creating an unfinished part (30) using a primary metal fabrication process (46), wherein the primary metal fabrication process leaves a surface deformation (38) on the unfinished part; and
removing the surface deformation from the unfinished part using a secondary metal fabrication process (84), wherein the secondary metal fabrication process further creates the finished part from the unfinished part.

13. The finished part (86) of claim 12, wherein the finished part is a finished airfoil (90).

14. The finished part (86) of claim 12 or 13, wherein the primary metal fabrication process (46) is investment casting (54); and/or
wherein the secondary metal fabrication process (84) exposes one or more cores (42) used in the primary metal fabrication process (46).

15. The finished part (86) of claim 12, 13 or 14, wherein the secondary metal fabrication process (84) is an electrochemical machining process (98); or
wherein the secondary metal fabrication process is a photochemical machining process (118).
